# EUROPEAN PATENT APPLICATION

(11) **EP 2 151 954 A1**
(43) Date of publication of application: **10.02.2010**
(21) Application number: 09382137.9
(22) Date of filing: 05.08.2009
(51) Int. Cl.: H04L 12/56, H04W 28/10, H04W 28/26

(54) **Method and system for accessing transport capacity in shared radio access networks**

(30) Priority: 06.08.2008 ES 200802360
(71) Applicant: Vodafone Group PLC, Newbury Berkshire RG14 2FN (GB); Vodafone España, S.A.U., 28108 Alcobendas, Madrid (ES)
(72) Inventor: De Pasqueale, Andrea, 28050 Madrid (ES); Dominguez Romero, Francisco, Javier, 28050 Madrid (ES); Garriga Muñiz, Beatriz, 28050 Madrid (ES)
(74) Representative: Carpintero Lopez, Francisco

(57) **Abstract**

Method and system for allocating capacity in shared radio access networks of wide area cellular telephone networks being shared by N mobile network operators, N ≥ 2, wherein allocation of an available bandwidth (1) on lub -or lur- interface comprises splitting the available bandwidth (1) of the interface into a set of N sharable partitions, each sharable partition having bandwidth initially assigned to one of the N mobile network operators for allocation to its traffic applying priority in packets and the bandwidth being available for any of the other N-1 operators to allocate the traffic from their users, as long as there is free bandwidth; if there is no free bandwidth in the sharable partition assigned to a given operator, bandwidth from another sharable partition, assigned to another of the N-1 operators, is allocated to the traffic applying a priority lower than the priority of packets of the other operator.

## Description

### TECHNICAL FIELD OF THE INVENTION

The present invention has its application within the telecommunications sector and, especially, in the industrial area engaged in providing access networks (e.g., UTRAN in UMTS) with elements of cellular infrastructures such as base stations (Nodes-B in UMTS) and controllers (Radio Network Controllers or RNC in UMTS) for wide area cellular telephone networks (i.e., 3G networks).

More particularly, the invention described herein relates to a method and system for accessing the available capacity (bandwidth) of UTRAN links, among a plurality of mobile network operators sharing the access network of a wireless communications system which supports 3G or beyond 3G technologies (e.g., HSDPA, LTE, WiMax, etc.). Here, UTRAN links refers to lub links, i.e., between Nodes-B and the RNC, as well as lur links, i.e., between one RNC and another, excepting the on-air Uu interface and the lu which provides each operator with dedicated links and no sharing applies

### BACKGROUND OF THE INVENTION

UTRAN (UMTS Terrestrial Radio Access Network) is a collective term which includes the Radio Network Controller (RNC), the 3G base stations (Nodes-B) and the air interface to the User Equipment (UE). More particularly, Node-B and RNC are elements that make up the UMTS radio access network and communicate through determined interfaces. Node-B handles radio channels, including the multiplexing/demultiplexing of user voice and data information. RNC is responsible for controlling and managing the multiple base stations (Nodes-B) including the utilization of radio network services.

There are four interfaces connecting the UTRAN internally or externally to other functional entities: lu, Uu, lub and lur. In particular, lub is an internal interface which constitutes a logical connection between the Node-B and RNC, and physically lub can be carried over multiple T1/E1 links from each Node-B aggregated to one or several ATM STM-1 (OC-3) links or one STM-4 link. More specifically, lub constitutes the Node-B Application Part (NBAP) defined by the 3GPP specification TS 25.433 providing UTRAN specific signaling and control for the following sample areas:
- Management of common channels, common resources, and radio links
- Configuration management, such as cell configuration management
- Measurement handling and control
- Reporting of error situations

UTRAN dimensioning task involves determining how much bandwidth or capacity is necessary for the lub interface to support a specific traffic load to satisfy the required Quality of Service (QoS).

Data traffic from mobile network operators (MNO) can easily fill-in the available lub transmission between Nodes-B and RNCs, and a good way to cope with it is to introduce priority management algorithms in order to give higher priority to specific users/applications when the available lub transport bandwidth is full.

Priority management across users and applications is today quite an important task in Telecommunication industry when the amount of data to be transported over the network is higher than the available bandwidth. Quality of Service (QoS) discrimination between user classes (e.g., categorising users into "gold", "silver", and "bronze" users) is one of the most important features for 3G wireless systems.

Any kind of priority policy designed by the MNO can be applied over the lub interface, when said MNO has full control of its network; for example, an operator could decide to give higher priority to data packets coming from business e-mail services vs. the packet data traffic coming from peer-to-peer applications or to differentiate among Gold, Silver and Bronze users. In order to do so, packets are in a way marked according to the desired priority, so that the different parts of the UTRAN will keep the packets with lower priority in queue for a longer time.

However, the situation can be quite different when shared networks are used.

UTRAN sharing is a technique which allows for all UTRAN elements to be physically shared: in particular, the RNCs, the Nodes-B and the lub resources allocated to carry voice and data from the RNCs to the Nodes-B.

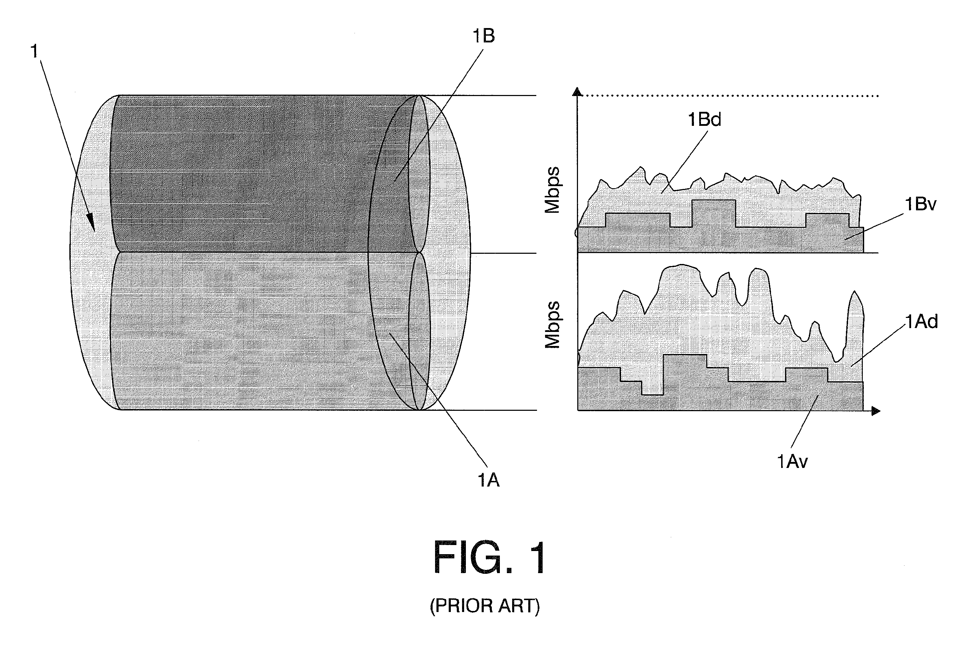

Figure 1 illustrates an example of a commercial implementation of UTRAN sharing in which all the resources are fully shared between operators: In the shown case, for a scenario with two different MNOs, lub capacity (1) is split into two partitions (1A, 1B) in both downlink and uplink. Each partition is fully dedicated to carry user traffic, such as voice and/or data packets, as well as control information, from one of the MNOs, that is, a partition allocated to one operator is unshared by the other operator. The whole lub capacity (1) is partitioned and the size of each partition, defined in Mbps, is in accordance to sharing agreements between the MNOs. The graphics show the use of the bandwidth allocated to each operator's partition for voice (1Av, 1Bv) and data packets (1Ad, 1Bd). Here the UTRAN sharing functions are physically shared but logically split into two UTRAN for the two different MNOs, each having their own PLMN, fault management, performance management and configuration management capabilities, and moreover retains the ability to deploy features unique to each network. By splitting a physical UTRAN into different logical UTRANs, multiple operators are able to cover the same area with their own frequency with a single physical UTRAN.

With special reference to the lub capacity (1), which is one of the most critical system bottleneck in today's 3G networks, since the lub transport resources are also shared between the different MNOs, prioritization policies over users or services applied by one MNO (e.g. no prioritization applied) can destroy the effectiveness of the policies applied by the operators (e.g. higher priority to business users, lower priority to users using peer-to-peer services). This can happen due to the fact that the packets corresponding to the two operators are mixed together, but the priority classes of the packets are set in an independent and non coordinated way by each of these two operators.

Typically, there are four different QoS classes defined in UMTS:

| **Traffic class** | **Conversational class** **Real Time** | **Streaming class** **Real Time** | **Interactive class** **Best Effort** | **Background class** **Best Effort** |
|---|---|---|---|---|
| **Fundamental characteristics** | - Preserve time relation (variation) between information entities of the stream - Conversational pattern (stringent and low delay ) | - Presserve time relation (variation) between information entities of the stream | - Request response pattern -Preserve payload content | -Destination is not expecting the data within a certain time -Preserve payload content |
| **Example of the application** | voice | streaming video | web browsing | telemetry, emails |

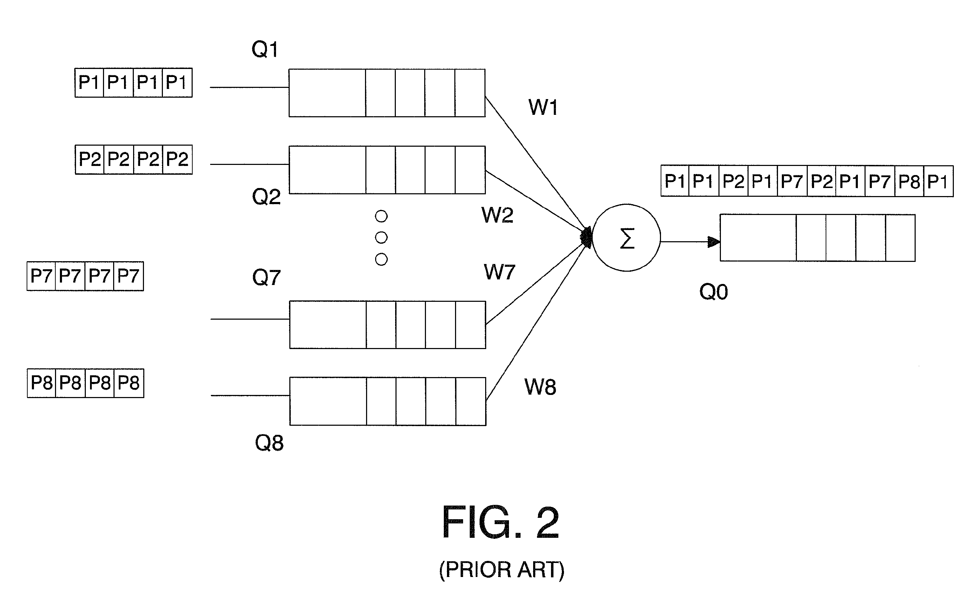

As an example, in Figure 2, the implementation of the priority management for a single MNO is shown in a conventional scenario where the whole lub capacity (1) is allocated to the MNO. Several queues (Q1, Q2, ..., Q7, Q8) are used to differentiate among diverse kinds of traffics (P1, P2, ..., P7, P8) and their corresponding priority for capacity allocation is determined by the weights (w1, w2, ..., w7, w8) assigned respectively to the queues. For instance, (Figure 2 is just an example, different number and kinds of priorities can be defined), different traffic classes (P1, P2,... P7, P8) are queued applying the respective prioritization weights (w1, w2, ..., w7, w8) into an output queue (Q0) of a Node-B or a RNC node:
P1: signalling traffic
P2: conversational traffic (voice and video-telephony)
...
P7: data of interactive or background applications with medium priority
P8: data of interactive or background applications with low priority

In order to improve the resource allocation on UTRAN internal interfaces (lub and lur) in current shared 3G networks, a new mechanism is presented as follows.

### SUMMARY OF THE INVENTION

The present invention solves the aforesaid problem by splitting the UTRAN interface capacity (bandwidth) by a number N, being N the number of different mobile network operators (MNO) to share the UTRAN elements, so that N sharable partitions are defined in the interface, here called bandwidth parts (BWP). Each of these BWPs is assigned to one of the N MNOs and is not always dedicated to the traffic from the assigned MNO, but when the traffic from said MNO consumes the whole capacity of its assigned BWP and there is remaining traffic to be allocated, the MNO can still use any unused part of the BWPs assigned to other MNO.

This invention is applied only to packets belonging to a QoS class that corresponds to the Best Effort Traffic Classes: Interactive and Background classes. This invention is applied only to UTRAN internal interfaces: lub and lur.

Whenever there is free bandwidth enough for traffic allocation in a BWP, the traffic from the MNO assigned to this BWP uses it and the priorities between packets are handled as if the UTRAN interface (lub or lur) weren't shared. But once the whole bandwidth of the BWP is consumed, the remaining packets pass to another BWP with available bandwidth and every packet is handled there with the lowest priority used in the system, i.e. with a priority always lower than any kind of traffic of the operator using its assigned BWP.

The size of bandwidth allocated for each (of the N) BWP is configurable and can be from 0 Mbps up to the whole lub bandwidth minus the size of the other BWP.

The invention can be applied in all areas of the networks where UTRAN Sharing agreements are in place, which means that two or more operators agree to use the same RNC and Nodes B in the region. The invention is especially useful in shared network scenarios where at least one of the operators implements any form of packet user differentiation.

An aspect of the invention refers to a method for accessing the allocated capacity to (voice and/or data) traffic demand from a plurality of mobile network operators which share a single physical radio access network of a wide area cellular telephone network (UTRAN in UMTS), including accessing available bandwidth on lub interface to traffic from all the mobile network operators sharing the UTRAN elements (there are N operators, N ≥ 2). For this access, the method comprises splitting the available bandwidth of lub interface into a plurality of partitions, having a plurality or a set of N sharable partitions (i.e., the set size is equal to the number of mobile network operators). Each sharable partition, with the bandwidth determined by Sharing agreements, is initially assigned to one of the N MNOs for allocating the traffic from users of said MNO, as long as there is free bandwidth, and traffic allocation on each partition is performed applying prioritization in packets of the different users. As long as there is free bandwidth, the bandwidth of each partition is also available for allocating traffic from any of the other N-1 mobile network operators, but applying a priority lower than the priority in packets of the MNO initially assigned to the partition.

Thus, if there is no free bandwidth in the sharable partition (BWP) assigned to a given mobile network operator, the traffic of this operator can access the available bandwidth from another sharable partition, assigned to another of the N-1 mobile network operators, by applying a priority lower than the priority of the packets of another mobile network operator.

Additionally, this method comprises a step of checking the bandwidth used at any moment in each bandwidth partition (BWP). When the maximum capacity of the BWP is reached, then the traffic is given the possibility to access the other BWP via the lowest priority queue.

Traffic from different users of each mobile network operator is queued according to traffic classes (Interactive class and Background class), defining queues for each sharable partition. Checking the bandwidth of the BWP assigned to a given mobile network operator comprises determining whether the maximum capacity of queuing in this BWP is reached and, if so, the queued traffic is assigned to the lowest priority and passed to a queue of another BWP, for example, randomly chosen.

Another aspect of the invention deals with a system for accessing the allocated capacity in a shared radio access network (UTRAN) to traffic demand from a plurality of N mobile network operators (MNOs) in a wide area cellular telephone scenario (UMTS), the system comprising at least a first node and at least a second node capable of connecting each other through an UTRAN internal interface (lub: one or both nodes can be a Node-B, or one of the nodes can be a RNC; or lur: both nodes are RNCs). Said nodes of the system comprise allocation means (for example, implemented on queues) configured for allocating the available bandwidth in accordance to the method described before, splitting it into N sharable partitions (as number N of MNOs, each partition assigned to one MNO). Additionally, the nodes (Nodes-B or RNC) include queuing means defined for each BWP and configured for queuing traffic from the different users and in accordance to priorities corresponding to the traffic classes. These nodes further comprise checking means for determining whether there is free bandwidth on the sharable partitions in any moment, checking the queues of each BWP for determining whether the maximum capacity is reached.

Other aspects of the invention refer to two UTRAN elements: a 3G base station (i.e. Node-B) and a radio network controller (RNC) respectively, each of this UTRAN element comprising allocation means and, in an additional manner, checking means configured for performing the steps of traffic allocation and bandwidth checking in the allocation sets defined according to the method described before.

The present invention delivers an effective way for controlling traffic congestion on lub (and lur) interface and a more efficient solution for sharing bandwidth on those interfaces among operators/service providers.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - shows a schematic representation of sharing lub bandwidth between two operators, having split it into two dedicated bandwidth partitions in accordance to the allocation technique defined in the prior art, and a graphical representation of the voice and data traffic allocated in each partition.
Figure 2. - shows a schema of queues implementing the user traffic differentiation in case of a single mobile network operator.
Figure 3. - shows a schematic representation of sharing lub bandwidth between two operators, having split it into two sharable bandwidth partitions in accordance to a preferred embodiment of the invention, and illustrates the effect on the lub utilization.
Figure 4. - shows a schema of queues implementing the user traffic differentiation in each bandwidth partition illustrated in the previous figure and how packets from one operator are moved into the lowest priority queues of the other operator.

### DETAILED DESCRIPTION OF THE INVENTION

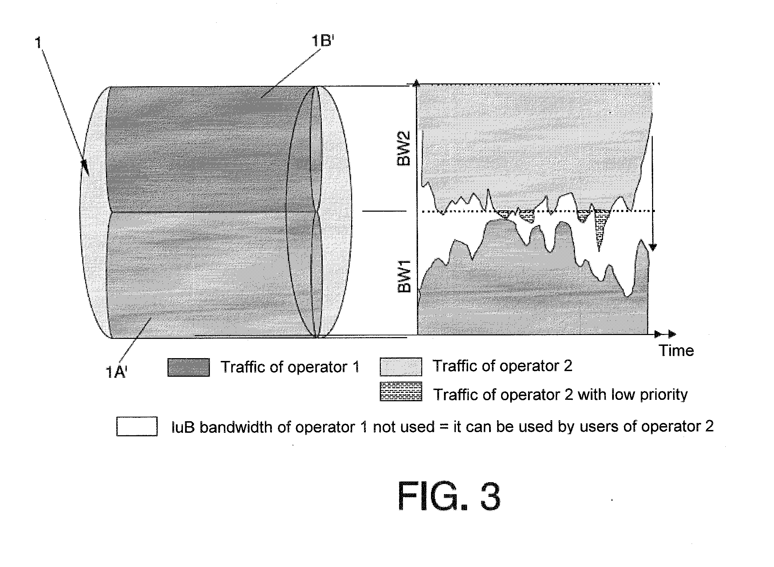

Figure 3 illustrates how the available bandwidth (1) on lub interface is allocated to the traffic demand of a plurality of N mobile network operators, in the example N = 2, following a preferred embodiment of the invention: The available bandwidth (1) of lub interface, e.g. 6 Mbps, is split into 2 sharable partitions (1A', 1B'), since there are N=2 operators. Each partition (1A', 1B') constitutes a bandwidth pool, with a determined size (BW1, BW2), for all users of each operator: operator 1, operator 2. This sharing allows the operator to use the bandwidth of the other partition when is not used by packets of the other operator. For example, as shown in the lub utilization curves of Figure 3, traffic of operator 1 with low priority and not able to be served with the bandwidth of the partition of operator 1 (BW1) can be allocated to bandwidth of the partition of operator 2 (BW2) when it is not used by operator 2

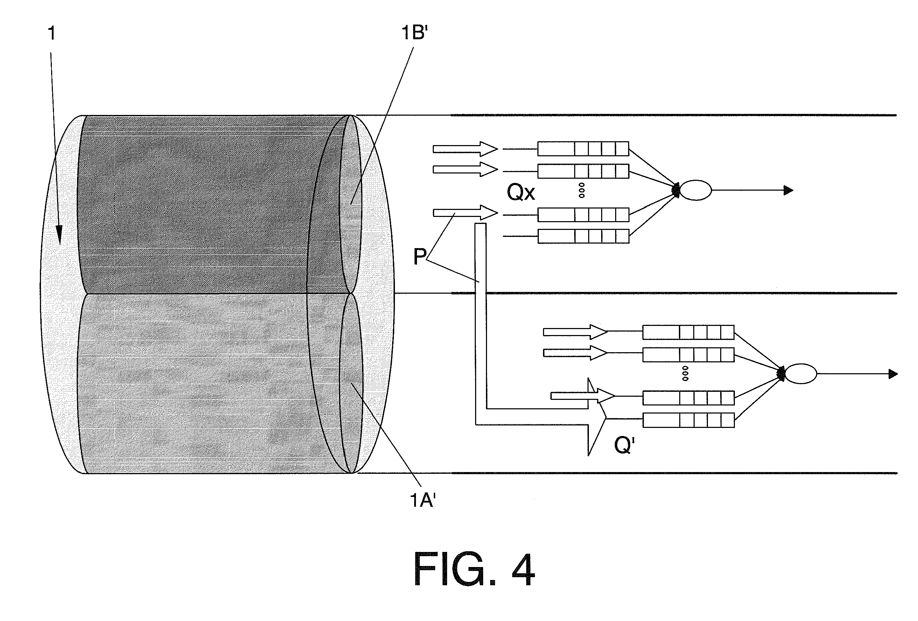

Following with the example of lub capacity sharing between 2 operators, Figure 4 shows a possible implementation of traffic allocation to the available bandwidth (1) using the two partitions (1A', 1B'). The bandwidth used at any moment is checked. The traffic packets from the different users of each operator are queued according to traffic classes and, so, given a certain priority. When the maximum capacity on a queue (Qx) is reached for a given moment in time, this means that the volume of packets in the queue Qx is higher than a threshold MAXQUEUE_Px, x ranges from 1 to P, being P the number of priorities defined in the system and being the value P the lowest priority .

In such cases, the new packets are by default assigned to the lowest priority in the system and go to the queues of a partition assigned to another operator.

Figure 4 illustrates an example in which the traffic from users of operator 1 reaches the maximum capacity of the queue associated with its corresponding priority in the partition of operator 1 (1A'). Then, the lowest priority traffic (P) is overloaded to the lowest priority queue (Q') of the other operator, that is, into the partition of operator 2 (1B'). In this way, traffic increase of operator 1 can be handled outside the allocated pool without affecting the traffic and the packet prioritization of operator 2.

If the number of operators is higher than two, the partition chosen for traffic allocation of other operators in case of maximum capacity reached in their respective queues can be selected randomly, excluding the partition considered to be full.

The same mechanism can be applied for allocating capacity to traffic of different classes and/or from different users on lur interface shared by a plurality of operators.

The terms in which this specification has been worded are always to be taken in the broadest sense and not restrictively.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

**1.** Method for accessing transport capacity in shared radio access networks of wide area cellular telephone networks, the access network being shared by a number N of mobile network operators, N ≥ 2, the method comprising allocating an available bandwidth (1) on an UTRAN internal interface to traffic from all the N mobile network operators and **characterized by**
- splitting the available bandwidth (1) of the UTRAN internal interface into a set of sharable partitions,
the set having a size equal to the number N of mobile network operators,
each sharable partition having bandwidth initially assigned to one of the N mobile network operators for allocation to its traffic applying priority in packets of said assigned mobile network operator and the bandwidth being accessible to the traffic of any of the other N-1 mobile network operators, as long as there is free bandwidth;
- if there is no free bandwidth in the sharable partition assigned to a given mobile network operator, accessing the bandwidth allocated to another sharable partition, assigned to another of the N-1 mobile network operators, applying a priority lower than the priority in packets of said another mobile network operator.

**2.** Method according to claim 1, further comprising queuing traffic from different users of each mobile network operator according to traffic classes selected from Interactive class and Background class, defining queues for each sharable partition.

**3.** Method according to claim 2, further comprising checking the bandwidth of the sharable partition assigned to a given mobile network operator by determining whether a maximum capacity of queuing in the partition assigned to said given mobile network operator is reached and, if so, the queued traffic is assigned to the lowest priority and passed to a queue of a certain sharable partition assigned to another mobile network operator.

**4.** Method according to claim 3, wherein the certain sharable partition is chosen randomly from any of the N-1 sharable partitions which is not the sharable partition initially assigned to the given mobile network operator.

**5.** System for accessing transport capacity in shared radio access networks of wide area cellular telephone networks, the access network being shared by a number N of mobile network operators, N ≥ 2, the system comprising at least a first node and at least a second node capable of connecting each other through an UTRAN internal interface which has an available bandwidth (1) for traffic from all the N mobile network operators, and **characterized in that** both the, at least one, first node and the, at least one, second node comprise allocation means configured for splitting the available bandwidth (1) of the UTRAN internal interface into a set of sharable partitions, the set having a size equal to the number N of mobile network operators and each sharable partition having bandwidth initially assigned to one of the N mobile network operators for allocation to its traffic applying priority in packets of said assigned mobile network operator, the bandwidth of each sharable partition being available to traffic from any of the other N-1 mobile network operators, as long as there is free bandwidth;
and the allocation means are configured for accessing the bandwidth assigned to another of the N-1 mobile network operators, applying a priority lower than the priority in packets of said another mobile network operator, and for allocating said bandwidth to the traffic from a given mobile network operator, if there is no free bandwidth in the sharable partition initially assigned to said given mobile network operator.

**6.** System according to claim 5, wherein the UTRAN internal interface is lub, and both the first node and the second node are third generation base stations.

**7.** System according to any of claims 5-6, wherein both the, at least one, first node and the, at least one, second node comprise queuing means defined for each sharable partition and configured for queuing traffic from different users of each mobile network operator according to traffic classes selected from Interactive class and Background class.

**8.** System according to claim 7, further comprising both the first node and the second node further comprise checking means for determining whether a maximum capacity of queuing in the partition assigned to a given mobile network operator is reached and the queuing means of each sharable partition are configured for passing traffic with the lowest priority to queuing means of a another different sharable partition assigned to another mobile network operator different from the given mobile network operator.

**9.** Third generation base station **characterized by** comprising allocation means configured for splitting the available bandwidth (1) of lub interface into a set of sharable partitions, the set having a size equal to the number N of mobile network operators and each sharable partition having bandwidth initially assigned to one of the N mobile network operators for allocation to its traffic applying priority in packets of said assigned mobile network operator, the bandwidth of each sharable partition being available to traffic from any of the other N-1 mobile network operators, as long as there is free bandwidth;
and the allocation means are configured for accessing the bandwidth assigned to another of the N-1 mobile network operators, applying a priority lower than the priority in packets of said another mobile network operator, and for allocating said bandwidth to the traffic from a given mobile network operator, if there is no free bandwidth in the sharable partition initially assigned to said given mobile network operator.

**10.** Third generation base station according to claim 9, further comprising queuing means defined for each sharable partition and configured for queuing traffic from different users of each mobile network operator according to traffic classes selected from Interactive class and Background class.

**11.** Third generation base station according to any of claims 9-10, further comprising checking means for determining whether a maximum capacity of queuing in the partition assigned to a given mobile network operator is reached and the queuing means of each sharable partition are configured for passing traffic with the lowest priority to queuing means of a another different sharable partition assigned to another mobile network operator different from the given mobile network operator.

**12.** Radio network controller **characterized by** comprising allocation means configured for splitting the available bandwidth (1) of lub interface into a a set of sharable partitions, the set having a size equal to the number N of mobile network operators and each sharable partition having bandwidth initially assigned to one of the N mobile network operators for allocation to its traffic applying priority in packets of said assigned mobile network operator, the bandwidth of each sharable partition being available to traffic from any of the other N-1 mobile network operators, as long as there is free bandwidth;
and the allocation means are configured for accessing the bandwidth assigned to another of the N-1 mobile network operators, applying a priority lower than the priority in packets of said another mobile network operator, and for allocating said bandwidth to the traffic from a given mobile network operator, if there is no free bandwidth in the sharable partition initially assigned to said given mobile network operator.

**13.** Radio network controller **characterized by** comprising allocation means configured for splitting the available bandwidth (1) of lur interface into a set of sharable partitions, the set having a size equal to the number N of mobile network operators and each sharable partition having bandwidth initially assigned to one of the N mobile network operators for allocation to its traffic applying priority in packets of said assigned mobile network operator, the bandwidth of each sharable partition being available to traffic from any of the other N-1 mobile network operators, as long as there is free bandwidth;
and the allocation means are configured for accessing the bandwidth assigned to another of the N-1 mobile network operators, applying a priority lower than the priority in packets of said another mobile network operator, and for allocating said bandwidth to the traffic from a given mobile network operator, if there is no free bandwidth in the sharable partition initially assigned to said given mobile network operator.

**14.** Radio network controller according to either claim 12 or 13, further comprising queuing means defined for each sharable partition and configured for queuing traffic from different users of each mobile network operator according to traffic classes selected from Interactive class and Background class.

**15.** Radio network controller according to any of claims 12-14, further comprising checking means for determining whether a maximum capacity of queuing in the partition assigned to a given mobile network operator is reached and the queuing means of each sharable partition are configured for passing traffic with the lowest priority to queuing means of a another different sharable partition assigned to another mobile network operator different from the given mobile network operator.
